# EUROPEAN PATENT APPLICATION

(11) **EP 4 299 220 A1**
(43) Date of publication of application: **03.01.2024**
(21) Application number: 22315130.9
(22) Date of filing: 28.06.2022
(51) Int. Cl.: B23B 29/034

(54) **BORING HEAD AND BORING TOOL ASSEMBLY**

(71) Applicant: Seco Tools AB, 737 82 Fagersta (SE)
(72) Inventor: Kopp-Chtarque, Frédéric, 737 82 Fagersta (SE)
(74) Representative: Sandvik

(57) **Abstract**

The present invention realties to a boring head for holding a boring tool for metal cutting. The boring head comprises a main body, which comprises a support surface (25) and a scale surface. The boring head further comprises a piston (6) comprising a boring tool interface for fixedly carrying the boring tool, wherein the piston (6) is movably arranged in the main body along the positioning axis (y), and a micrometer screw (19). The micrometer screw (19) is arranged in the main body and coupled to the piston (6), such that, when the micrometer screw (19) is rotated, the piston (6) is moved along the positioning axis to one of the protracted positions or the retracted position. The micrometer screw (19) comprises a head (21) abutting against the support surface (25), which head (21) comprises a radially outer head surface (26) provided with first graduation marks (23). The scale surface is provided with second graduation marks (29), which second graduation marks (29) align with the first graduation marks (23) to provide a reading of the axial position of the piston (6). The scale surface is a convexly rounded bevel surface (28) with an arc-shaped edge (32) at the head surface (26).

## Description

### Technical field

The present invention relates to a boring head for holding a boring tool for metal cutting and to a boring tool assembly comprising the boring head.

### Background

Boring heads that allow a precise positioning of a replaceable boring tool, mounted on the boring head, in order to control the cutting diameter with high precision are well known. Such boring heads may comprise a piston on which the boring tool is mounted, and a micrometer screw operable to move the piston with the mounted boring tool relative a main body of the boring head. Thereby a cutting position of a cutting edge of the boring tool can be adjusted, so that, when the boring head is mounted on a rotatable spindle, the cutting diameter is changed. A scale on the micrometer screw aligns with a scale on the main body for providing a reading of the cutting position. A problem with known such boring heads is that free sight of the scales is obstructed making reading and thus exact positioning difficult.

### Summary

An object of the present invention is to at least partly obviate the above mentioned problem. This object is achieved according to the invention by means of a boring head according to claim 1 and a boring tool assembly according to claim 13.

An inventive boring head for holding a boring tool for metal cutting comprises
- a main body, which extends along a positioning axis from an axially outer end to an axially inner end, and which comprises a support surface and a scale surface,
- a piston comprising a boring tool interface for fixedly carrying the boring tool when the boring tool is held in the head, wherein the piston is movably arranged in the main body along the positioning axis to a retracted position axially inward and to a plurality of protracted positions axially outward therefrom,
- a micrometer screw arranged in the main body and coupled to the piston, such that, when the micrometer screw is rotated, the piston is moved along the positioning axis to one of the protracted positions or the retracted position,
   wherein
- the micrometer screw comprises a head abutting against the support surface, which head comprises a radially outer head surface provided with first graduation marks, and
- the scale surface is provided with second graduation marks, which second graduation marks align with the first graduation marks to provide a reading of the axial position of the piston,
wherein the scale surface is a convexly rounded bevel surface with an arc-shaped edge at the head surface.

Thus, the second graduation marks of the main body are provided on a surface that is shaped as a convexly rounded bevel. In contrast, in commonly used known boring heads, the second graduation marks are provided on a surface that is in the same plane as a support surface against which the head of the micrometer screw abuts, or in other words, on a surface that is perpendicular to the axis of the micrometer screw. In such known boring heads, an operator has to look along the axis of the micrometer screw in order to obtain an accurate reading. However, in many applications this view is blocked when the boring head is mounted in a machine, why an operator often has to look at the two scales from an angle. Thereby the graduation marks of the scale may be difficult to see, or the view angle introduces a parallax error.

Thanks to the bevel of the inventive scale surface, a perpendicular, or close to perpendicular, view toward the graduation marks is enabled even though the view is from a side of the boring head and not along an axis of the micrometer screw. Thereby, an unblocked view in which parallax error is avoided, or at least reduced, is achieved. Furthermore, thanks to the rounded shape of the bevel surface with the arc-shaped edge at the head surface of the screw head, the second graduation marks line up more accurately against an angular section of the first graduation marks. Consequently, a more accurate reading is achieved so that the accuracy in positioning the piston, and any boring tool with a cutting edge held therein, is improved as compared to the prior art devices.

The present boring head and the boring tool assembly are intended to be used in boring operations as an accessory for a machine tool, for example a CNC machine, i.e. a machine with computer numerical control. Therein, the boring head is configured for holding a boring tool and for fixing the boring tool to a rotatable spindle. The boring tool is suitable for cutting machining of workpieces upon rotation of the boring tool around an axis of rotation. The workpieces may in particular, but not exclusively, be metallic workpieces. The boring head and boring tool assembly are suitable for enlarging preproduced holes to holes with larger diameter than the preproduced holes. The boring head is especially suitable for producing enlarged holes with high demands on tolerances in terms of geometry and dimension. The present boring head and boring tool assembly are furthermore especially advantageous for.small diameter holes, wherein the enlarged finished holes have a diameter of maximally 350mm, preferably maximally 150mm, more preferably maximally 114mm.

The boring tool may be a solid boring tool, wherein a cutting edge and a holder are in one piece, or more preferably, comprise an insert holder and a replaceable, and optionally indexable, cutting insert, which is mounted to the insert holder.

The boring head comprises a main body, preferably in the form of a housing for components of the boring head.

The piston, which is a component of the boring head, is movably arranged in the main body along a positioning axis. The piston is operable to move to a retracted position, which is the position furthest axially inward along the positioning axis. Furthermore, the piston is operable to move axially outward form the retracted position to a plurality of protracted positions. Preferably, the protracted positions can be selected from any position along the positioning axis axially outward of the retracted position to a maximally protracted position.

The positioning axis defines an axial direction in the boring head and in components thereof, wherein axially inward is a direction toward the retracted position of the piston, and axially outward is a direction axially opposite thereto.

Preferably, the boring head is configured mountable to a spindle for rotating the boring head around an axis of rotation defining an axial direction x in the boring head and in components thereof, wherein the direction x is perpendicular to the positioning axis. A boring tool assembly comprises the boring head and the boring tool, which is mounted in the boring tool interface of the piston so that it is fixedly carried thereby. Preferably, when the piston is in the retracted position, a cutting edge of the boring tool is in a minimal cutting diameter position, and, when the piston is in a maximal protracted position of the protracted positions, the cutting edge of the boring tool is in a maximal cutting diameter position.

The piston is preferably received in a guiding cavity inside the main body such that the piston slides along the guiding cavity with a minimum clearance when operated to move along the positioning axis. The piston preferably extends along a longitudinal axis which coincides with the positioning axis and the piston may have any suitable cross section, such as circular or shaped as regular polygon, for example a square or rectangle.

The piston comprises a boring tool interface, which interface for example comprises a seat or a coupling half. The boring tool interface is adapted to cooperate with a complementary interface of a boring tool for fixing the boring tool to the piston. Preferably, the boring tool is immovably fixed to the piston such that relative movement is prevented. Instead, the piston carries the boring tool such that the boring tool moves together with the piston. Optionally, the boring head includes a screw and/or a clamp for securing the boring tool in the interface.

Preferably, the piston extends along the positioning axis. When the boring tool is mounted in the boring tool interface of the piston and fixedly carried thereby, at least the cutting edge is located outside the main body. Optionally, the piston or only the boring tool protrudes from the main body through an opening in the main body for exposing the cutting edge.

According to an embodiment, the boring tool interface is configured for holding a boring tool that has a longitudinal axis, wherein the longitudinal axis optionally extends perpendicular to, parallel with, or coincides with positioning axis. Correspondingly, an opening in the main body for exposing the cutting edge may be an elongated slot or a bore. Optionally, the boring tool interface is arranged at an axial end of the piston, or at a distance from both axial ends.

A micrometer screw, which is another component of the boring head, is arranged in the main body and coupled to the piston. The micrometer screw comprises a head, and preferably a shaft. The main body comprises a support surface, for example a portion of an outer surface of a housing or a surface of a component arranged in the housing, against which the head of the micrometer screw abuts. The micrometer screw is coupled with the piston, preferably by the shaft. For transferring rotational motion of the micrometer screw to translational motion of the piston, the micrometer screw interacts directly or indirectly with the piston while the head abuts against the support surface. To this end, the head preferably comprises an abutment surface facing toward the shaft of the micrometer screw. The head abuts against the support surface with the abutment surface, wherein the abutment surface, when the micrometer screw is rotated, slides against the support surface.

According to an embodiment, the micrometer screw is in threaded engagement with the piston, for example by means of an external thread on a shaft of the micrometer screw engaging an internal thread in a boring of the piston.

According to another embodiment, the micrometer screw interacts with the piston via coupling elements, such as for example gears and shafts, which for example are placed inside the main body.

The direction of the micrometer screw depends on how the micrometer screw is coupled with the piston and on the direction of the positioning axis. Preferably, the shaft of the micrometer screw extends in parallel with or coincides with the positioning axis. Thereby, the micrometer screw may be directly coupled to the piston and exert translational motion thereon without intermediate components so that, advantageously, the motion of the piston is more exact.

According to an embodiment, the support surface is located at an axially inner end of the main body, faces axially inward, and is normal to the positioning axis. Similarly, the abutment surface of the head faces axially outward and is normal to the positioning axis. Preferably, the micrometer screw engages the piston at an axially inner end thereof, and the boring tool interface is located at an axially outer, opposite end of the piston. This is a simple design that is able to achieve high accuracy of the positioning of the piston upon turning of the micrometer screw.

The head comprises a radially outer head surface provided with first graduation marks and the main body comprises a scale surface, which is provided with second graduation marks. The second graduation marks align with the first graduation marks to provide a reading of the axial position of the piston.

The scale surface is a convexly rounded bevel surface with an arc-shaped edge at the head surface. According to an embodiment, the head of the micrometer screw is located at one side surface of the main body, preferably an axially inner side, and the scale surface intersects the side surface as a bevel, wherein the arc-shaped edge forms a line of intersection. In the embodiment, the support surface is close to the line of intersection and is in the same plane as or in a plane parallel to the side surface. Thereby, the head with the radially outer head surface and the graduation marks are adjacent the scale surface.

The convexly rounded bevel surface is curved outward in relation to the inside of the main body.

Preferably, at least a portion of the arc-shaped edge has a center of curvature in an axis of rotation of the micrometer screw, wherein the second graduation marks intersect or have an equal distance to the arc-shaped edge. Thereby the second graduation marks also have the same distance to a preferably circular edge of the radially outer head surface and the first graduation marks thereon, so that the graduation marks are closely aligned. Thanks to this design a reliable reading is obtainable.

According to an embodiment, the second graduation marks are linear and parallel. For example, a first end of each of the second graduation marks is at the arc-shaped edge. The second graduation marks are preferably spaced at an equal angular distance along the arc-shaped edge. Thereby advantageously the second graduation marks line up with the head surface when viewed perpendicular toward the bevel.

Preferably, the radially outer edge of the head surface has an arc-shape corresponding to the arc-shaped edge of the convexly rounded bevel surface, for example circular with a center of curvature in an axis of rotation of the micrometer screw. Preferably, the first graduation marks on the head surface are linear, radially extending and have an equal angular spacing. Preferably, the first graduation marks intersect the edge of the head surface or have an equal distance thereto.

According to a preferred embodiment, the first graduation marks 23 and the second graduation marks 29 form a Vernier scale, wherein preferably the first graduation marks are the main marks and the second graduation marks are the Vernier marks. Other embodiments may have any suitable type scale or configuration of the graduation marks. Optionally, the first graduation marks and/or the second graduation marks are grooves, ridges or colored lines.

Preferably, the convexly rounded bevel surface extends axially outward from the arc-shaped edge. This orientation of the bevel surface is suitable for preferred embodiments where the support surface is located at an axially inner end of the main body, faces axially inward, and is normal to the positioning axis. The convexly rounded bevel surface is for example a portion of a curved lateral surface of geometrical body having a longitudinal axis, for example the radially outer surface of a cylindrical sector or a sector of a truncated cone. According to an embodiment, the longitudinal axis extends axially outward.

According to an embodiment where the support surface is located at an axially inner end of the main body, faces axially inward, and is normal to the positioning axis, as seen in a section comprising the positioning axis and a central point between a first and a last of the second graduation marks, the bevel surface forms an angle with the positioning axis of at least 30° and at most 60°, preferably at least 40° and at most 50°, for example 45°. Thereby a straight, perpendicular view from suitable angles is enabled. In embodiments where the convexly rounded bevel surface is curved around a longitudinal axis, this angle can be seen as the angle between the longitudinal axis and the positioning axis.

As seen along the positioning axis, a central point between a first and a last of the second graduation marks has an angular distance α to an axis extending in the direction x of a value in the range of 0° - 90°, and preferably of at least 30° and at most 70°. This is especially advantageous when the boring head is mounted in a machine with vertical spindle. In machines with vertical spindles, an operator is exposed to lubricant or coolant when looking from below why this arrangement allows a straight, perpendicular view toward the graduation marks from an angle. In an embodiment with a cuboid main body, the scale surface preferably forms a bevel at a corner, i.e. at a corner of three side surfaces of the main body, wherein the head of the micrometer screw is at one of the side surfaces.

The head surface is at least a portion of a top surface or a side surface of the head, for example a cylindrical side surface. Preferably, the head surface is a lateral surface of a truncated cone and preferably a top surface of the head, which preferably faces axially inward. According to an embodiment, the cone angle is equal to the angle of the bevel surface. Thereby, the graduation marks of both surfaces can be seen approximately equally well from the same view angle.

The micrometer screw is configured rotatable by any suitable means, such as by a tool, for example a wrench or a key. Preferably, the head comprises a socket for an Allen key, which is a tool that allows accessibility and transfer of rotation also in narrow spaces.

According to an embodiment where the support surface is located at an axially inner end of the main body, faces axially inward, and is normal to the positioning axis, the head comprises an axially outward facing abutment surface, wherein the head, at the outer radial edge thereof, has an axial thickness from the abutment surface to the head surface. Furthermore, the support surface is arranged a distance axially outward from the arc-shaped edge, which distance is equal to the axial thickness. Thereby it is advantageously possible to arrange a radially outer edge of the head surface flush with the arc-shaped edge of the convexly rounded bevel surface, which enhances readability of opposed graduation marks.

An embodiment of the boring tool assembly comprises, in addition to the boring head and the boring tool held thereby, a bridge that is configured mountable to the spindle. The boring head is mounted on the bridge at a first axial end, wherein the positioning axis of the boring head defines the axial direction of the bridge. The tool assembly further comprises a counterweight, which is mounted on an opposite second axial end of the bridge, wherein the head surface of the micrometer screw faces axially inward toward the counterweight. In this design, a view along the positioning axis is blocked by the counterweight, why the inventive convexly rounded bevel surface is especially advantageous. In an alternative embodiment, instead of a counterweight, the tool assembly comprises another boring head. The another boring head preferably has the same features as the inventive boring head, for example identical to the inventive boring head. In other embodiments, the another boring head is of another kind. Furthermore, the boring tools held by the respective boring heads may be identical or off different kind, for example one of the boring tools is for fine boring and the other for finishing.

### Brief description of the drawings

In the following, example embodiments will be described in greater detail and with reference to the accompanying drawings, in which:
Fig. 1 is a perspective view of a rotatable tool holder onto which a tool assembly according to a first embodiment of the present invention is mounted;
Fig. 2 is a perspective view of a boring head according to a first embodiment of the present invention;
Fig. 2b is a view along the positioning axis of the boring head according to a first embodiment;
Fig. 3a and b are views according to line III-III in Fig. 2b of the boring head according to the first embodiment;
Fig. 4 is a section according to line IV-IV as indicated in Fig. 3a of the boring head according to the first embodiment;
Fig. 5 is a view along the positioning axis of a main body and a mounting structure of the boring head according to a first embodiment;
Fig. 6 is a section according to line VI-VI in Fig. 5 of the main body and the mounting structure of the boring head according to a first embodiment;
Fig. 7 is a perspective view of the main body and the mounting structure of the boring head according to a first embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

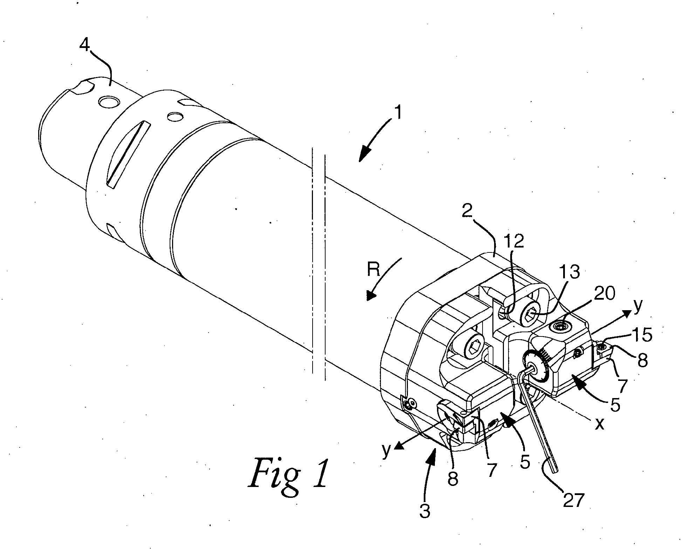

Fig. 1 shows a rotatable tool holder 1 extending along an axis of rotation x. In a front end as seen along the axis of rotation x, a tool assembly 3 according to a first embodiment of the present invention is mounted. The tool holder is mountable to a spindle of a CNC machine by means of a machine interface in form of a Capto coupling 4 arranged in a rear end as seen along the axis of rotation x.

The boring tool assembly 3 comprises a bridge 2 and two identical boring heads 5 according to a first embodiment of the present invention attached thereto. Each boring head 5 holds a respective boring tool in form of an insert holder 7 and a replaceable and indexable cutting insert 8, wherein the cutting insert 8 is mounted in the insert holder 7 by a mounting screw 15. In Fig. 1, each boring head 5 with associated boring tool is configured for right-handed rotation R. The boring tools are intended for cutting machining of a workpiece upon rotation of the rotatable tool holder 1 around the axis of rotation x in the direction R. In other embodiments, the boring heads are configured for left-handed rotation.

According to another embodiment, the boring tool assembly 3 comprises one boring head 5 according to the first embodiment of the present invention and a counterweight instead of the another one of the boring heads of the first embodiment.

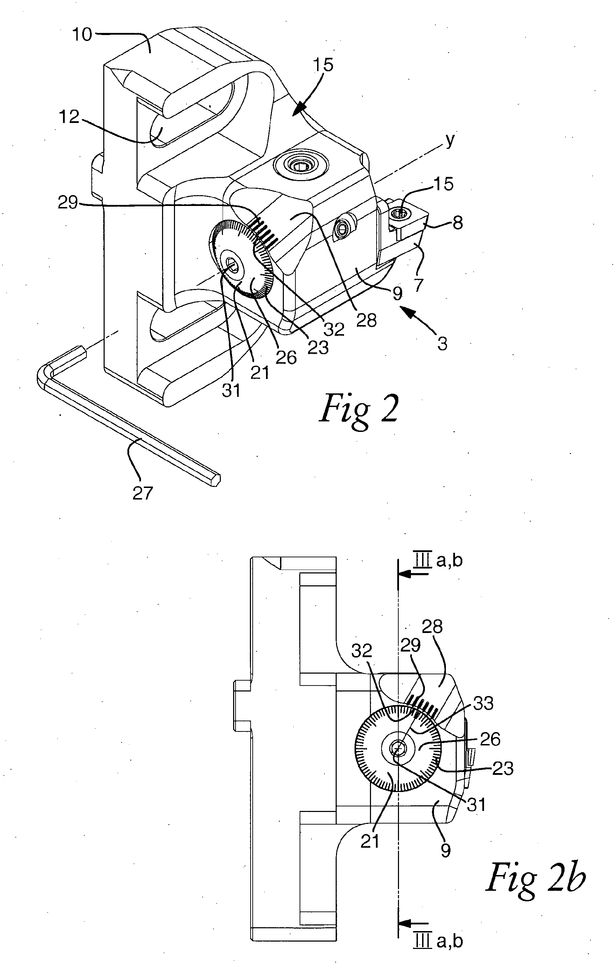

In Figs. 2 - 7, the boring head 5 according to the first embodiment is shown. The boring head 5 comprises a mounting structure 10 and a main body in form of a housing 9. In the first embodiment, the mounting structure 10 and the housing 9 are a one piece integral component. The mounting structure 10 comprises elongated slots 12 through which fastening screws 13 are insertable for attaching the boring head 5 to the bridge 2, c.f. Fig. 1. Thanks to the elongated shape of the slots 12, the position of the boring head on the bridge 2 is adjustable. The housing 9 has a basic shape of a square cuboid. In other embodiments, the housing is rounded, for example cylindrical or spherical.

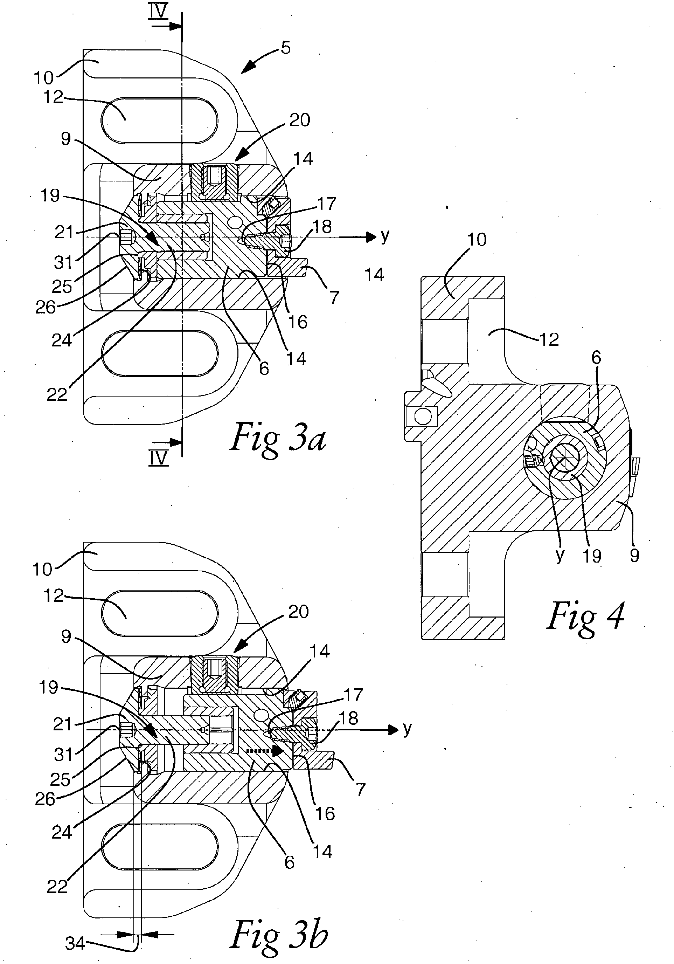

A piston 6 is movably arranged in the housing 9 along a positioning axis y. In Fig. 3a, the piston 6 is shown in a retracted position axially inward as seen along the positioning axis, and in Fig. 3b, the piston 6 is in a first of a plurality of protracted positions, wherein all of the protracted positions are axially outward from the retracted position as seen along the positioning axis. The positioning axis y defines an axial direction y in the boring head 5, in components thereof, and in the bridge 2 when the boring head is mounted thereon. The piston 6 is received in a guiding cavity inside the housing 9 such that the piston slides along guiding surfaces 14 of the guiding cavity with a minimum clearance when operated to move along the positioning axis y. The piston 6 extends along a longitudinal axis which coincides with the positioning axis y and has a circular cross section. The piston 6 comprises a boring tool interface in form of insert holder support surfaces 16 and a threaded hole 17. The insert holder support surfaces 16 are adapted to cooperate with surfaces of the insert holder 7 for immovably fixing the boring tool to the piston 6, wherein the boring tool comprises the insert holder 7 with mounted cutting insert 8. The boring tool is immovably fixed to the piston 6 by means of a fixing screw 18, which is threaded in the hole 17. Thereby relative movement between the piston 6 and the boring tool is prevented, wherein the piston 6 carries the boring tool such that the boring tool moves together with the piston 6.

The boring head further comprises a combined orientation and fixing device 20 for orienting and fixing the piston 6 relative the housing 9 of the boring head 5 in the retracted or in any of the protracted positions. In the shown embodiment, the orienting and fixing device comprises a blind sleeve for receiving a tightening screw, which upon tightening, forces a flexible bottom of the blind sleeve against a flat surface of the piston 6. Other embodiments comprise different orientation and fixing devices, for example a device comprising a separate locking screw and a separate orientation screw configured to cooperate with a respective portion of the piston.

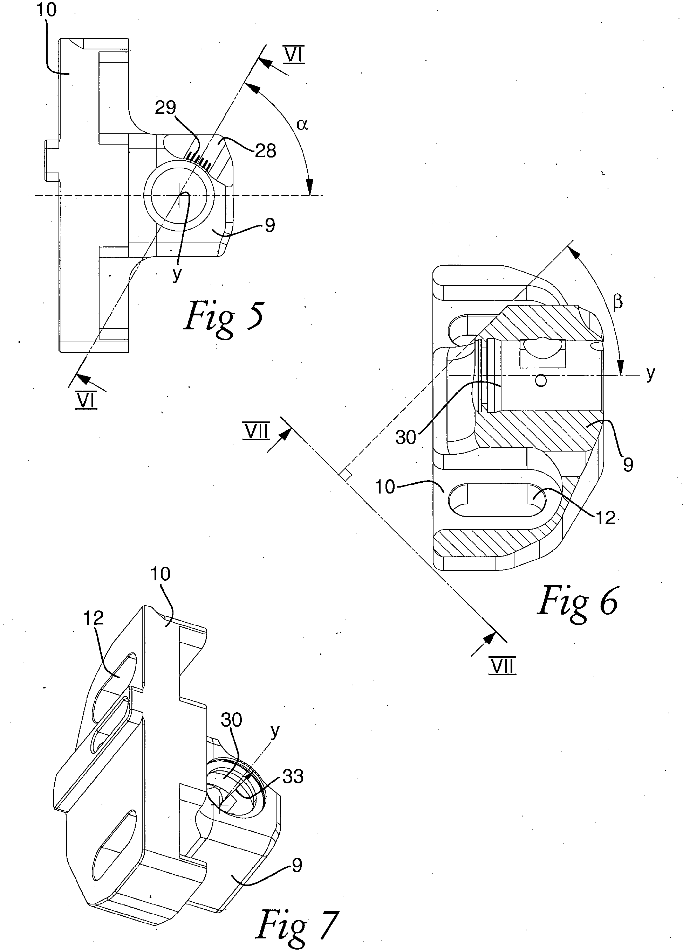

The boring head 5 further comprises a micrometer screw 19, which is arranged in the housing 9 and coupled to the piston 6 by being in threaded engagement with the piston 6. The micrometer screw 19 comprises a head 21 and a shaft 22. The shaft 22 extends through a through hole 30, c.f. Figs. 6 and 7, in a wall of the housing 9 and has an external thread which is in engagement with an internal thread in a boring of the piston 6 to form the threaded engagement. A longitudinal axis of the shaft 22 of the micrometer screw 19 coincides with the positioning axis y and the longitudinal axis of the piston 6. The shaft 22 of the micrometer screw 19 engages the piston 6 at the axially inner end of the piston 6, and the boring tool interface is located at the axially outer, opposite end of the piston 6. The boring tool extends through an axially outer opening in the housing 9 so that a cutting edge is exposed.

At the shaft side of the head 21, the head has an abutment surface 24, which is an annular surface extending from the shaft 2 and radially outward to a side surface of the head 21. The abutment surface 24 of the head 21 faces axially outward and is normal to the positioning axis y. The abutment surface 24 abuts against a support surface 25 of a component arranged in the housing 9. The support surface 25 surrounds the through hole 30 for the shaft 22 in the wall of the housing 9, which wall is one of the cuboid sides of the housing 9, specifically the side facing axially inward. The support surface 25 is located at an axially inner end of the housing 9, faces axially inward, and is normal to the positioning axis y.

The head 21 has a top surface facing away from the shaft 22 and axially inward. A socket 31 for an Allen key 27 is provided centrally in the top surface. The top surface comprises a radially outer portion in form of a head surface 26, which has the shape of a lateral surface of a truncated cone and extends from the socket 31 and radially outward to the side surface of the head 21. The head surface 26 is provided with first graduation marks 23. The first graduation marks 23 are linear, radially extending, have an equal angular spacing and intersect the edge of the head surface 26 at the side surface of the head 21.

The housing 9 comprises a scale surface, which is provided with second graduation marks 29. The second graduation marks 29 align with the first graduation marks 23 to provide a reading of the axial position of the piston 6.

The scale surface is a convexly rounded bevel surface 28 with an arc-shaped edge 32 at the head surface 26. The arc-shaped edge 32 has a portion that has a radius of curvature 33 with a center at the axis of rotation of the micrometer screw 19, which corresponds to the positioning axis y. A radially outer edge of the head surface 26 has a radius of curvature which is slightly smaller and has the same center at the axis of rotation of the micrometer screw. All the second graduation marks 29 are arranged at this portion and intersect the arc-shaped edge 32. The rounded bevel surface 28 is shaped as a radially outer surface of a cylindrical sector and extends axially outward from the arc-shaped edge 32. The second graduation marks 29 are linear and parallel, wherein they follow the surface of the cylindrical sector in a direction of an associated longitudinal axis of the sector. The second graduation marks 29 are spaced at an equal angular distance along the arc-shaped edge 32.

At the outer radial edge of the head surface 26, the head has an axial thickness 34 to the abutment surface 24. The support surface 25 in the housing 9 is arranged a distance axially outward from the arc-shaped edge, which distance is equal to the axial thickness 34. Thereby, a radial outer end of the first graduation marks 23 and a radially inner end of the second graduation marks 29 at the arc-shaped edge 32 are substantially flush and have substantially the same distance to each other.

The convexly rounded bevel surface 28 is formed at a corner of the housing 9. The rounded bevel surface 20 intersects three of the side surfaces of the cuboid housing 9. As seen along the positioning axis y, a central point between a first and a last of the second graduation marks 29 has an angular distance α to an axis extending in the direction of rotation x of 60°, c.f. Fig. 5.

As seen in a section shown in Fig. 6, which section comprises the positioning axis y and a central point between a first and a last of the second graduation marks 29, the convexly rounded bevel surface 28 forms an angle β with the positioning axis y of 45°. This can be understood as a bevel angle of the convexly rounded bevel surface 28.

With reference to the tool holder 1 shown in Fig. 1, the two boring heads 5 are mounted on opposite axial ends of the bridge 2. In the tool holder 1, the positioning axis y of the piston 6 corresponds to a radial direction. The head surface 26 of the micrometer screw 19 of one of the two boring heads 5 faces axially inward toward the other of the two boring heads 5. In order to set the tool holder for a desired, final diameter of a hole, an operator has to adjust the position of the boring tool of both heads 5. An operator may insert the Allan key 27 into the socket 31 in the head 21 of the micrometer screw and rotate the Allen key. Thereby, the micrometer screw 19 is caused to rotate. The rotation of the micrometer screw 19 is transferred to transitional movement of the piston 6 by the threaded engagement of the shaft 22 with the piston 6, and by the abutment surface 24 of the head 21 abutting against the support surface 25 in the housing 9. The piston 6 move along the positioning axis y, wherein the piston 6 slides along guiding surfaces 14 of the guiding cavity with a minimum clearance. The operator is informed about the axial position of the piston 6 by reading the first graduation marks 23 and the second graduation marks 29. In the present embodiment, the first graduation 23 and the second graduation marks 29 form a Vernier scale, wherein the first graduation marks 23 are the main marks and the second graduation marks 29 are the Vernier marks. The tool holder with mounted tool assembly 3 is a small tool holder for boring diameter of maximally 315 mm. In spite of that a view along the positioning axis 5 is blocked by the opposite boring head 5, thanks to the inventive convexly curved bevel surface 28 with the arc-shaped edge 32 at the head surface 26, the operator is able to read the scales without parallax error. After the desired diameter has been set, the operator may remove the Allan key 27.

## Claims

1. A boring head for holding a boring tool for metal cutting comprising
- a main body, which extends along a positioning axis (y) from an axially outer end to an axially inner end, and which comprises a support surface (25) and a scale surface,
- a piston (6) comprising a boring tool interface for fixedly carrying the boring tool when the boring tool is held in the boring head, wherein the piston (6) is movably arranged in the main body along the positioning axis (y) to a retracted position axially inward and to a plurality of protracted positions axially outward therefrom,
- a micrometer screw (19) arranged in the main body and coupled to the piston (6), such that, when the micrometer screw (19) is rotated, the piston (6) is moved along the positioning axis to one of the protracted positions or the retracted position,
wherein
- the micrometer screw (19) comprises a head (21) abutting against the support surface (25), which head (21) comprises a radially outer head surface (26) provided with first graduation marks (23), and
- the scale surface is provided with second graduation marks (29), which second graduation marks (29) align with the first graduation marks (23) to provide a reading of the axial position of the piston (6),
**characterized in that**
the scale surface is a convexly rounded bevel surface (28) with an arc-shaped edge (32) at the head surface (26).

2. The boring head according to claim 1, wherein at least a portion of the arc-shaped edge (32) has a center of curvature in an axis of rotation of the micrometer screw (19), wherein all the second graduation marks (29) of the portion intersect or have an equal distance to the arc-shaped edge (32).

3. The boring head according to claim 2, wherein the rounded bevel surface (28) is the radially outer surface of a cylindrical sector.

4. The boring head according to any preceding claim, wherein the second graduation marks (29) are linear and parallel.

5. The boring head according to any preceding claim, wherein the boring head is configured mountable to a spindle for rotating the boring head around an axis of rotation defining an axial direction (x) in the boring head, wherein the direction (x) is perpendicular to the positioning axis (y).

6. The boring head according to claim 5, wherein, as seen along the positioning axis (y), a central point between a first and a last of the second graduation marks (29) has an angular distance (α) to an axis extending in the direction (x) of at least 30° and at most 70°.

7. The boring head according to any preceding claim, wherein the support surface (25) is located at an axially inner end, faces axially inward, and is normal to the positioning axis (y).

8. The boring head according to claim 7, wherein the convexly rounded bevel surface (28) extends axially outward from the arc-shaped edge (32).

9. The boring head according to claim 8, wherein, as seen in a section comprising the positioning axis (y) and a central point between a first and a last of the second graduation marks (29), the bevel surface forms an angle (β) with the positioning axis (y) of at least 30° and at most 60°.

10. The boring head according to any claim 7 - 9, wherein
- the head comprises an axially outward facing abutment surface (24), wherein the head, at the outer radial edge thereof, has an axial thickness (34) from the abutment surface (24) to the head surface (26), and
- the support surface (25) is arranged a distance axially outward from the arc-shaped edge, which distance is equal to the axial thickness (34).

11. The boring head according to any preceding claim, wherein the head surface (26) is a lateral surface of a truncated cone.

12. The boring head according to any preceding claim, wherein the micrometer screw (19) is in threaded engagement with the piston (6).

13. A boring tool assembly comprising the boring head according to any preceding claims, and a boring tool, wherein the boring tool is mounted in the boring tool interface of the piston (6) so that it is fixedly carried thereby and held in the boring head.

14. The boring tool assembly according to claim 13, wherein the boring head comprises the features of claim 5, and wherein, when the piston (6) is in the retracted position, a cutting edge of the boring tool is in a minimal cutting diameter position, and, when the piston (6) is in a maximal protracted position of the protracted positions, the cutting edge of the boring tool is in a maximal cutting diameter position.

15. The boring tool assembly according to claim 14, further comprising a bridge that is configured mountable to the spindle, wherein
- the boring head is mounted on the bridge (2) at a first axial end, wherein the positioning axis (y) of the boring head defines the axial direction of the bridge (2),
- the tool assembly comprises another boring head or a counterweight, which is mounted on an opposite second axial end of the bridge (2), and wherein
- the head surface (26) of the micrometer screw (19) faces axially inward toward the another boring head or counterweight.
